(19) Europäisches Patentamt
European Patent Office
Office européen des brevets

(11) EP 4 211 071 B1

(12) **EUROPEAN PATENT SPECIFICATION**

(45) Date of publication and mention of the grant of the patent:
**06.11.2024 Bulletin 2024/45**

(21) Application number: **21770273.7**

(22) Date of filing: **13.09.2021**

(51) International Patent Classification (IPC):
***C01B 3/12*** *(2006.01)* ***B01D 53/047*** *(2006.01)*
***C01B 3/56*** *(2006.01)* ***C01B 32/50*** *(2017.01)*

(52) Cooperative Patent Classification (CPC):
**C01B 3/12; B01D 53/047; C01B 3/56; C01B 32/50;**
B01D 2256/16; B01D 2256/22; B01D 2259/40016;
B01D 2259/40043; B01D 2259/40086;
C01B 2203/043; C01B 2203/82; Y02C 20/40;
Y02P 20/151

(86) International application number:
**PCT/EP2021/075133**

(87) International publication number:
**WO 2022/053692 (17.03.2022 Gazette 2022/11)**

(54) **SORPTION-ENHANCED WATER-GAS SHIFT PROCESS FOR THE FORMATION OF A CO2 PRODUCT STREAM AND AN H2 PRODUCT STREAM**

SORPTIONSVERSTÄRKTES WASSER-GAS-SHIFT-VERFAHREN ZUR BILDUNG EINES CO2-PRODUKTSTROMS UND EINES H2-PRODUKTSTROMS

PROCESSUS DE CONVERSION EAU-GAZ AMÉLIORÉ PAR SORPTION POUR LA FORMATION D'UN FLUX DE PRODUITS CO2 ET D'UN FLUX DE PRODUITS H2

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **11.09.2020 EP 20195765**

(43) Date of publication of application:
**19.07.2023 Bulletin 2023/29**

(73) Proprietor: **Nederlandse Organisatie voor toegepast-natuurwetenschappelijk Onderzoek TNO**
**2595 DA 's-Gravenhage (NL)**

(72) Inventors:
- **JAMES, Jebin Duthie**
  **2595 DA 's-Gravenhage (NL)**
- **SEBASTIANI, Francesco**
  **2595 DA 's-Gravenhage (NL)**
- **VAN DIJK, Hendricus Adrianus Johannes**
  **2595 DA 's-Gravenhage (NL)**
- **BOON, Jurriaan**
  **2595 DA 's-Gravenhage (NL)**

(74) Representative: **Nederlandsch Octrooibureau**
**P.O. Box 29720**
**2502 LS The Hague (NL)**

(56) References cited:
**EP-A1- 3 604 210** **US-A1- 2015 014 595**
**US-B2- 10 350 538**

- **RICK REIJERS ET AL: "SEWGS process cycle optimization", ENERGY PROCEDIA, vol. 4, 2011, pages 1155 - 1161, XP028213028, ISSN: 1876-6102, [retrieved on 20110401], DOI: 10.1016/J.EGYPRO.2011.01.168**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 211 071 B1

## Description

### Field of the invention

The present invention is in the field of syngas treatment and relates to a sorption-enhanced water-gas shift (SEWGS) process for the formation of a COz product stream and an Hz product stream which requires much less steam than conventional processes.

### Background art

Energy-intensive sectors such as steel, refining and chemical industries are still largely dependent on fossil fuels and raw materials, so that it remains important to capture and reuse the released COz. Unused COz can be stored safely, for example in depleted natural gas fields in the North Sea. In the long term, negative COz emissions may become the target, which can be obtained by, for example, storing the released COz in the use of biomass. The overall reduction in the COz emitted into the atmosphere is one of the major challenges in the present-day society, especially for industries where large amounts of carbon atoms remain as side-product, which are typically emitted as COz.

Sorption-enhanced water-gas shift (SEWGS) has been developed for the conversion of CO to Hz and COz, allowing the formation of a COz product stream and an Hz product stream, wherein COz is captured by means of adsorption, and can then be stored or reused. This process can be employed to purify the Hz gas in a syngas mixture containing CO and/or COz, to obtain a Hz product stream and a by-product stream wherein the incoming carbon atoms are captured in a COz stream. The COz product stream may then be subjected to COz storage and as such eliminate COz emissions into the atmosphere.

In the art, high-pressure steam supply in hydrogen production processes is made more efficient by a water gas shift process which comprises (i) a reaction stage wherein a feed gas comprising CO and $H_2O$ is fed into a water gas shift reactor column containing a sorbent material capable of adsorbing COz and wherein a product gas issuing from the reactor is collected, (ii) a rinse stage wherein high pressure steam is fed to the column, (iii) one or more pressure equalisation steps wherein the high-pressure column is connected to a column in another stage of the cycle at lower pressure and requiring repressurisation, (iv) a blowdown step wherein the pressure in the column is reduced to the regeneration pressure, (v) a regeneration stage wherein $H_2O$ is fed (i.e. a purge stage) and COz is removed from the reactor, (vi) one or more pressure equalisation steps wherein the column is repressurised with gas from a column at a higher pressure in another stage of the cycle and requiring depressurisation, and (vii) a final repressurisation step in which the pressure in the column is raised to the reaction stage pressure.

Existing SEWGS processes operate economically under steam consumption constraints. SEWGS cycle design therefore involves minimising the steam consumption during the rinse and purge stages while achieving desirable product specifications in terms of e.g. carbon capture ratio (CCR), carbon dioxide purity (CP), Hz recovery (HR) and/or hydrogen purity (HP). A high CCR and high CP can be achieved, but generally at the expense of a certain CAPEX (number of SEWGS columns) and OPEX (steam consumption).

Separation-enhanced water gas shift (SEWGS) processes are known from EP 3 604 210 A1 and Rick Reijers et Al. ("SEWGS process for cycle optimization, Energy Procedia, vol. 4, pages 1155-1161).

WO 2010/059055 (EP 2362848) discloses a water gas shift process with a reaction stage, wherein the reaction stage comprises (a) providing a gas mixture comprising CO, $H_2O$ and an acid gas component to a reactor containing an adsorbent, and (b) subjecting the gas mixture to water gas shift reaction conditions to perform the water gas shift reaction. The adsorbent used in WO 2010/059055 comprises an alkali promoted hydrotalcite material, and the acid gas component comprises $H_2S$.

EP 2739373 discloses a water gas shift (WGS) process for the removal of acidic gases by adsorption, and relies on the selective desorption of adsorbed acidic gases from adsorbents that are suitably used in such processes. In such processes using basic adsorbents, acidic gaseous components such as carbon dioxide and hydrogen sulphide end up in the same product (or effluent) stream, which makes reuse or purification of these streams difficult. EP 2739373 introduced a stepwise and selective removal of gaseous acidic species for adsorbents used for producing desirable especially hydrogen-containing-gas mixtures by conducting a purging stage in two steps, thereby obtaining two different product gases. In this way an impurity ($H_2S$) can be removed, such that the COz purity (CP) in the final product gas is increased.

WO 2013/122467 discloses that the high-pressure steam supply in a hydrogen production process can be made more efficient by a water gas shift process which comprises, in alternating sequence (i) a reaction stage wherein a feed gas comprising CO and $H_2O$ is fed into a water gas shift reactor containing a sorbent material capable of adsorbing $H_2O$ and COz and wherein a product gas issuing from the reactor is collected, (ii) a regeneration stage wherein COz is removed from the reactor, (iii) a loading stage, wherein $H_2O$ is fed into the reactor, wherein said feed gas mixture has a molar ratio of $H_2O$ to CO below 1.2, and the loading stage is performed at a lower pressure than the pressure of the reaction stage.

Boon et al. (Chemical Engineering Science 122, 2015, 219-231) published a research article on high-temperature pressure swing adsorption cycle design for sorption-enhanced water gas shift. The article describes a SEWGS process which combines the water-gas shift reaction with in situ adsorption of COz on potassium-promoted hydrotalcite and thereby allows production of hot, high-pressure $H_2$ from syngas in a single unit operation. In this study, SEWGS is run as a cyclic process that comprises high-pressure adsorption and rinse stages, combined with pressure equalisation steps and purge at low pressure. The authors have shown that during the cycle, steam adsorbs in the rinse step and desorbs during the subsequent reduction in pressure, thereby improving the COz purity in the column and enhancing the efficiency of the rinse stage. Numerical simulations showed that the carbon capture ratio depends mainly on the purge steam to carbon feed ratio, whereas the COz product purity depends mainly on the rinse steam to carbon feed ratio. Optimisation of the process parameters provided a SEWGS cycle that consumes significantly less steam than cycle designs known until then, and significantly less energy than COz separation technologies known until then. The present invention relates to a SEWGS cycle with reduced CAPEX and/or OPEX for a given performance in terms of CCR and CP.

There nevertheless remains a general need to further improve the existing SEWGS processes in terms of operational economy, sustainable use of resources and overall cost. For example, a specific challenge remains to simultaneously achieve both a high CCR and a high CP in SEWGS processes at substantially lower steam use, while providing an Hz product stream that is suitable for further industrial, chemical processes. The process according to the invention provides in this need.

## Summary of the invention

Accordingly, the invention provides a sorption-enhanced water-gas shift (SEWGS) process for the formation of a COz product stream and an Hz product stream, wherein the process comprises:

(a) a reaction step, wherein a feed gas comprising $CO_x$, wherein x = 1 - 2, and $H_2O$ is fed into a SEWGS reactor containing a catalyst and sorbent material capable of adsorbing COz, thereby forming the Hz product stream and a sorbent material loaded with COz;
(b) a rinse step, wherein steam is fed to the SEWGS reactor, thereby establishing a pressure between 5 and 50 bar;
(c) a pre-blowdown step, wherein the pressure in the SEWGS reactor is reduced to establish a blowdown pressure in the range of 0.5 to 1.5 times the partial pressure of CO and COz in the feed gas of step (a);
(d) a blowdown step, wherein the pressure in the SEWGS reactor is reduced to the regeneration pressure in the range of 1 to 5 bar, thereby releasing at least part of the COz from the loaded sorbent material, thereby forming the COz product stream; and
(e) a purge step, wherein steam is fed to the SEWGS reactor, thereby releasing further COz molecules from the SEWGS reactor.

The present inventors have found that both a high carbon capture ratio (CCR) and carbon dioxide purity (CP) in SEWGS processes can be achieved with significant reduced amount of steam than conventional processes, while providing an Hz product stream of high purity that is suitable for further industrial, chemical processes, by employing a pre-blowdown step, which is employed before a blowdown step. During the pre-blowdown step, the pressure in the SEWGS reactor is reduced to a total pressure in the range of 5 to 50 bar.

The process according to the invention hence incorporates a pre-blowdown step in an SEWGS process, which represents an intermediate step enabling the collection of impurities. The pre-blowdown step also allows for a simultaneous improvement of the carbon capture ratio (CCR) and the carbon dioxide purity (CP) in the overall SEWGS process at reduced steam usage. The pre-blowdown step differs from a pressure equalisation step in that the released gas is not kept in the pressure equalisation cycle, but instead the released gas is collected separately.

## Brief description of the drawings

The present invention will be discussed in more detail below, with reference to the attached drawings, in which:

Figure 1 depicts the carbon capture ratio (CCR) and carbon dioxide purity (CP) in a SEWGS cycle according to the invention depending on the employed blowdown pressure at the end of the pre-blowdown step, simulated at a total feed flowrate of 3.42 kmol/h.
Figure 2 depicts the carbon capture ratio (CCR) and carbon dioxide purity (CP) in a SEWGS cycle according to the invention depending on the employed blowdown pressure at the end of the pre-blowdown step, simulated at a total feed flowrate of 1.71 kmol/h.

Figure 3 demonstrates the effect of increasing stream introduction during rinse, represented as total S/C, on the carbon capture ratio (CCR) and carbon dioxide purity (CP) in a process without pre-blowdown step (solid dots), compared to the process according to the invention comprising a pre-blowdown step (open dots).

## Description of embodiments

The invention provides a sorption-enhanced water-gas shift (SEWGS) process for the formation of an intermediate stream, a COz product stream and an $H_2$ product stream. The inventors have found that an optimization of the regeneration of the SEWGS reactor, after the water-gas shift reaction has been performed, enables the formation of a substantially pure COz product stream and a substantially pure $H_2$ product stream. This optimization step resides in a pre-blowndown step, wherein the pressure is reduced to close to the regeneration pressure. The off gas released from the reactor during the pre-blowdown step is collected separately from the CO2 product stream released from the reactor during the blowdown step.

The reaction pressure is the pressure during step (a); the pre-blowdown pressure is the pressure at which the pre-blowdown step begins; the blowdown pressure is the pressure at which the pre-blowdown step ends and the blowdown step begins; and the regeneration pressure is the pressure at the end of the blowdown step.

More specifically, the process according to the invention comprises:

(a) a reaction step, wherein a feed gas comprising $CO_x$, wherein x = 1 - 2, and $H_2O$ is fed into a SEWGS reactor containing a catalyst and sorbent material capable of adsorbing COz, thereby forming the $H_2$ product stream and a sorbent material loaded with COz;
(b) a rinse step, wherein steam is fed to the SEWGS reactor, thereby establishing a pressure between 5 and 50 bar;
(c) a pre-blowdown step, wherein the pressure in the SEWGS reactor is reduced to establish a blowdown pressure in the range of 0.5 to 1.5 times the partial pressure of $CO_x$ in the feed gas of step (a);
(d) a blowdown step, wherein the pressure in the SEWGS reactor is reduced to the regeneration pressure in the range of 1 to 5 bar, thereby releasing at least part of the COz from the loaded sorbent material, thereby forming the COz product stream; and
(e) a purge step, wherein steam is fed to the SEWGS reactor, thereby releasing further COz molecules from the SEWGS reactor.

The present inventors have found that both a high carbon capture ratio (CCR) and carbon dioxide purity (CP) in SEWGS processes can be achieved, while providing an Hz product stream that is suitable for further industrial, chemical processes, by employing a pre-blowdown step, which is employed before a blowdown step. During the pre-blowdown step, the pressure in the SEWGS reactor is reduced to establish a blowdown pressure in the range of 0.5 to 1.5 times the partial pressure of CO and COz in the feed gas of step (a). The pre-blowdown step is thus characterised by a decreased initial blowdown pressure as compared to the blowdown pressure of the actual blowdown step, wherein the pressure in the SEWGS reactor is reduced to the regeneration pressure which is between 1 and 5 bar.

*Step (a): Reaction*

In step (a), the water-gas shift reaction takes place. A feed gas comprising $CO_x$, wherein x = 1-2, and $H_2O$ is fed into a SEWGS reactor containing a catalyst and sorbent material capable of adsorbing COz. The COz molecules formed during the water-gas shift reaction and/or present in the feed are sorbed onto the sorbent material, thereby forming a sorbent material loaded with COz. Typically, at the beginning of step (a), the sorbent material contains sorbed water molecules. During step (a) water molecules are desorbed and COz molecules are adsorbed. As such, COz is removed from the product mixture of the water-gas shift reaction, thereby pushing the equilibrium towards the product side. The off gas of the reactor during step (a) will thus contain Hz and desorbed molecules, typically steam.

Such sorption-enhanced water-gas shift reactions are known in the art. Step (a) can be performed in any way known in the art. The skilled person is capable of selecting an appropriate sorbent material and catalyst, as well as appropriate conditions for performing the water-gas shift reaction. In a preferred embodiment, the reaction of step (a) is performed at a reaction pressure in the range of 15 - 50 bar, preferably in the range of 20 - 30 bar, most preferably in the range of 22 - 25 bar.

The feed comprises $CO_x$, wherein x = 1 - 2, and HzO, and typically further comprises Hz. $CO_x$ denotes CO, COz or mixtures thereof, and may also be referred to as "carbon oxide", with CO and COz being the two carbon oxide species, or as "CO and/or COz". The value of x denotes the number of oxygen atoms present per carbon atom in the carbon oxide fraction (i.e. CO + COz) of the feedstock, irrespective of any further oxygen and/or carbon atoms that may be present in the feedstock. Thus, x is in the range of 1 - 2, wherein $x$ = 1 indicates pure CO and $x$ = 2 indicates pure COz. An intermediate value for x indicates that a mixture of CO and COz is present in the feedstock, which can readily be determined by the skilled person. As example, when $x$ = 1.9, 1.9 oxygen atoms are present per carbon atom, meaning that the molar ratio of CO:$CO_2$ is 1:9. Likewise, when $x$ = 1.5, the CO:$CO_2$ molar ratio is 1:1.

The process according to the invention operates efficiently using a feedstock wherein $x$ is any value in the range 1 - 2. In one embodiment, the feedstock contains CO, or in other words $x < 2$, i.e. $1 \leq x < 2$. In one embodiment, COz may be the major carbon oxide species and x is close to 2, e.g. $x$ = 1.3 - 2, preferably $x$ = 1.4 - 1.8. In an alternative embodiment, CO may be the major carbon oxide species and x is close to 1, e.g. $x$ = 1 - 1.8, preferably $x$ = 1 - 1.5, more preferably $x$ = 1 - 1.2, or even $x$ = about 1.

Alternatively worded, the feedstock contains 0 - 10 mol% CO and 0 - 80 mol% COz, wherein the total content of $CO_x$ in the feedstock is at least 2 mol%, preferably in the range of 2 - 80 mol%, more preferably 2 - 60 mol%. Preferably, the feedstock contains 2-8 mol% CO and 0 - 30 mol% COz, wherein the total content of $CO_x$ in the feedstock is preferably in the range of 2 - 20 mol%, more preferably 3 - 10 mol%.

A certain amount of COz may thus be present in the feed. Any $H_2$ and COz is not converted in the process according to the invention, but ends up in respectively the $H_2$ product stream or the COz product stream. The feed may also contain further gaseous components which are inert in the reaction according to the invention, such as inert gases (e.g. $N_2$, Ar, $CH_4$ and larger hydrocarbons, such as up to $C_4$) and contaminants arising from the industrial process, such as syngas originating from reforming or gasification of fossil or biogenic feedstocks, from which the feed originates (e.g. $H_2S$, $NO_x$, etc.). Important for the operation of the process, especially for the pre-blowdown step (c), is the partial pressure of the sum of CO and COz (i.e. of $CO_x$) in the feed. Since all CO will be converted to COz during step (a), this represents the amount of COz present in the system and to be collected during the regeneration steps (b) - (e). The inventors found that the performance of the process, in terms of CCR and CP, was optimal when the blowdown pressure was chosen to be close to the amount of COz present in the system, i.e. close to the partial pressure of $CO_x$ in the feed of step (a). Typically, the partial pressure of $CO_x$ in the feed is in the range of 1 - 50 bar, preferably 2 - 20 bar, more preferably 5-15 bar, most preferably about 10 bar. As such, the majority of the COz will still be in the reactor at the beginning of blowdown step (d) and collected in the COz product stream, while other components and impurities are largely removed from the system, mainly in the pre-blowdown off-gas.

The off gas of the reaction step (a) forms the $H_2$ product stream, and contains $H_2$ and desorbed molecules, and optionally any inert gases that are present in the feed and defined elsewhere. The $H_2$ product stream may be subjected to further purification, such as removal of the desorbed molecules. For example, a condensation step could advantageously remove desorbed water molecules.

At some point, preferably before break-through of COz, the reactor is subjected to a regeneration sequence, wherein it is regenerated in order to be subjected to step (a) again. It is thus preferred that the process according to the invention is operated in cyclic mode. The regeneration sequence involves steps (b) - (e). The regeneration may be referred to as a pressure swing adsorption (PSA).

*Step (b): Rinse*

Rinse step (b) is the first step of the regeneration sequence, wherein steam is fed to the SEWGS reactorto establish a pressure between 5 and 50 bar. At these conditions, water molecules are adsorbed onto the sorbent, while COz molecules are desorbed, releasing COz into the gas phase of the reactor. At the beginning of step (b), the gaseous volume of the reactor will mainly contain Hz and possible non-sorbed COz molecules.

At the very beginning of step (b), the off-gas may contain predominantly $H_2$, and may optionally be collected together with the Hz product stream obtained during step (a). The skilled person is able to determine when the stop collecting the Hz product stream, and switch to separate collection of the off-gas. In a preferred embodiment, the switch to separate off-gas collection is made at the start of step (b), which is particularly advantageous in case the reactor is switched from step (a) to step (b) close to break-through of COz.

Preferably, the rinse of step (b) is performed at substantially the same pressure as the reaction of step (a), although a slight pressure change (typically a slight increase) may occur in view of the introduction of steam. The pressure during step (b) typically is in the range of 20 - 50 bar, preferably in the range of 22 - 28 bar, more preferably in the range of 24 - 26 bar. The amount of steam that is fed into the SEWGS reactor during rinse step (b) can be lowered compared to conventional processes not including a pre-blowdown step. The amount of steam may be in the range of 0.01 - 0.5 mol%, preferably 0.02 - 0.2 mol% or even as low as 0.02 - 0.1 mol%, based on the amount of $CO_x$ feed during step (a). The inventors have obtained optimal results in terms of COz purity and carbon capture rate with such low amounts of steam.

*Step (c): Pre-blowdown*

The process according to the invention incorporates a pre-blowdown step in a SEWGS process, which represents an intermediate step enabling the collection of impurities before the actual blowdown step. The pre-blowdown step thereby also allows for a simultaneous improvement of the carbon capture ratio (CCR; i.e. the extent of incoming carbon atoms that are captured as $CO_2$ in the $CO_2$ product stream) and the carbon dioxide purity (CP) in the $CO_2$ product stream.

During the pre-blowdown step, the pressure within the reactor is lowered to establish a blowdown pressure in the range of 0.5 to 1.5 times the partial pressure of $CO_x$ in the feed gas of step (a). The actual pressure reduction achieved in the pre-blowdown step may vary depending on the starting pressure after the rinse and optional depressurizing steps, and the partial pressure of $CO_x$ in the feed gas. For example, the pressure may be reduced by 1 - 25 bar, preferably by 2 - 8 bar, more preferably by 3 - 5 bar. In view of this pressure reduction, the actual blowdown step starts at a lower pressure compared to conventional regeneration sequences of a water-gas shift reactor. The pre-blowdown step differs from a depressurization step in the context of pressure equalisation in that the released gas is not kept in the pressure equalisation cycle, but instead is collected separately, as a pre-blowdown off-gas. The pre-blowdown off-gas may contain a combination of some remaining $H_2$ still present in the reactor, non-adsorbed $H_2O$, desorbed $CO_2$ and any further component (e.g. inert gases) that may be present in the feed and/or the steam rinse gas of step (b). Thus, the pre-blowdown off-gas is lean in $CO_2$ but rich in energy.

A further advantage over existing SEWGS processes is that the incorporation of the pre-blowdown step does not require any additional rinse steam and also does not require any additional pressure equalisation steps, as the actual blowdown step starts at a lower pressure. The pre-blowdown step is hence similar to the blowdown step in that gas in the SEWGS reactor is released by lowering the pressure, without using a purge gas. An important difference is that the gas released in the pre-blowdown step and the gas released in the blowdown step are collected separately. The pre-blowdown step has the advantage that the product gas from the blowdown step is of better quality, i.e. has a higher CP, and additionally provides increased control of the exact pressure at which the blowdown step is performed. In view of the pre-blowdown step, the process according to the invention does not need to employ multiple purging steps, but instead uses a pre-blowdown step and the actual blowdown step, which is technically simpler to realise, and having the additional advantage of increased control of the starting pressure of the blowdown step. In one embodiment, the pre-blowdown and blowdown off-gases are collected at the same side of the column, for example at the top side. In other words, the pre-blowdown and blowdown steps are preferably performed co-currently, preferably in the direction of the feed. As such, the separate handling of both gases is conveniently done by the simple switching of a valve from a first position configured to collect pre-blowdown off-gas to a second position configured to collect blowdown off-gas. As such, both off-gases can efficiently be led to the appropriate further handling thereof, as further discussed below.

Typically, the pre-blowdown step is preceded by one or more depressurizing steps. Those are typically paired with pressurizing steps which may occur after the purge step, as part of one or more pressure equalizing steps. The skilled person is familiar with pressure equalizing steps in the context of a pressure swing adsorption regeneration sequence. Advantageously, the carbon purity can be enhanced by introducing pressure equalisation steps which effect depressurisation of the SEWGS reactor directly after the rinse step (b) which leads to a decreased initial blowdown pressure. Generally, a high blowdown pressure, i.e. the pressure at which the blowdown step and the collection of the $CO_2$ product stream starts, causes a relatively larger amount of impurities in the $CO_2$ product stream, which hamper proper capture of the $CO_2$. Furthermore, any $H_2$ molecule that ends up in the $CO_2$ product stream reduces the $H_2$ yield of the process.

During the pre-blowdown step, the pressure within the reactor is reduced, typically by 2 - 8 bar, preferably by 3 - 5 bar. The pre-blowdown step typically starts at a pressure in the range of 5-20 bar, preferably in the range of 8 - 16 bar, at which pressure gas is released from the reactor and collected separately as a pre-blowdown off-gas. During pre-blowdown, no gas enters the reactor and all release of gas is caused by the pressure release. At a certain pressure, the blowdown pressure, the off-gas collection is switched and the $CO_2$ product stream is collected. This event marks the switch from the pre-blowdown step to the blowdown step. The blowdown pressure is typically in the range of 0.5 - 1.5 times the partial pressure of $CO_x$ in the feed gas of step (a), preferably in the range of 0.8 - 1.2 times the partial pressure of $CO_x$ in the feed gas. It is especially preferred that the blowdown pressure is about equal to the partial pressure of $CO_x$ in the feed gas. Thus, in case the feed gas of step (a) would contain 2 bar of CO and 2 bar of $CO_2$, it is preferred that the blowdown pressure, i.e. the pressure in the reactor at which the collection of the $CO_2$ product stream starts, is about 4 bar. Additionally or alternatively, the blowdown pressure is defined in absolute terms. In one embodiment, the blowdown pressure is in the range of 2 - 10 bar, preferably 3-7 bar, most preferably about 4 bar.

Lower blowdown pressures lead to an even more pure $CO_2$ product stream, but also to an increased release of $CO_2$ into the pre-blowdown off-gas and thus in a lowered carbon capture ratio. Higher blowdown pressures lead to less $CO_2$ released into the pre-blowdown off-gas and thus in an increased carbon capture ratio, but also to reduced purity of the $CO_2$ product stream. The inventors found that the blowdown pressures presented here provide the optimal balance, such that the SEWGS process according to the invention provides an unprecedented combination of $CO_2$ product stream purity and carbon capture ratios at a given steam usage.

The off gas of the pre-blowdown step may be used as deemed fit. As this gas contains a combination of gaseous molecules that are useful within the process, it is preferred that the pre-blowdown off gas is subjected to reaction step (a). This may be effected by combining the pre-blowdown off gas with the feed of step (a), and subjecting the combined mixture to the reactor in step (a), of by separately introducing the feed of step (a) and the pre-blowdown off gas to the reactor of step (a). As such, $H_2$ molecules present in the pre-blowdown off gas will end up in the $H_2$ product stream and COz molecules present in the pre-blowdown off gas will end up in the COz product stream. Preferably, $H_2O$ molecules are removed from the pre-blowdown off gas before it is subjected to step (a), typically by condensation, to lower the volume that is to be subjected to step (a). Since the pre-blowdown off gas contains gases from a pressure drop of 2 - 8 bar, of which $H_2O$ molecules may further have been removed, it is a relatively small stream, which does not reduce the capacity of the reactor in step (a) too much.

In an alternative embodiment, the pre-blowdown off gas is separately collected as tail gas, e.g. as a product stream of the process, and used as deemed fit. Process integration options can preferably make use of the particular composition of this stream. For example, it may be combusted to generate heat needed for the process according to the invention. The presence of steam in this stream may be beneficial for control of the $NO_x$ emissions as shown by Chiesa P, Lozza G & Mazzocchi L (2005), Using hydrogen as gas turbine fuel, J. Eng. Gas Turbines Power 127(1), 73-80; and Göke S, Füri M, Bourque G, Bobusch B, Göckeler K, Krüger O et al. (2013), Influence of steam dilution on the combustion of natural gas and hydrogen in premixed and rich-quench-lean combustors, Fuel processing technology 107, 14-22. A further advantage is that steam dilution of Hz also allows to lower the reactivity of hydrogen, because already a relatively low steam content prevents flashback, and thus reduces the risk of explosion.

In case the pre-blowdown off gas is recompressed and recycled to step (a), the presence of COz in the pre-blowdown off gas does not lead to a reduction in carbon capture ratio, since the COz molecules are not collected but recycled and will thus largely end up in the COz product stream anyway. Thus, a slightly lower blowdown pressure, preferably in the range of 2 - 4 bar, preferably about 3 bar, can be used in order to increase the purity of the COz product stream. On the other hand, in case the pre-blowdown off gas is collected as tail gas, it is preferred that it contains as little as possible COz, and thus a somewhat higher blowdown pressure, preferably in the range of 3 - 8 bar, preferably about 5 bar, is preferred in order to increase the carbon capture ratio of the process according to the invention. Alternatively worded, the blowdown pressure is in the range of 0.5 - 1.25, preferably 0.5 - 1, times the partial pressure of CO and COz in the feed gas of step (a) when the pre-blowdown off gas is recompressed and recycled to step (a), and the blowdown pressure is in the range of 0.75 - 1.5, preferably 1 - 1.5, times the partial pressure of CO and COz in the feed gas of step (a) when the pre-blowdown off gas is collected as tail gas.

*Step (d): Blowdown*

Step (d) of the process according to the invention involves the actual blowdown step, wherein the COz product stream is collected. In order to facilitate carbon capture processes, the purity of this stream should be as high as possible, and the intermediate pre-blowdown step enables higher purities of the stream. The blowdown step of the present invention differs from conventional blowdown steps in that it starts at a somewhat reduced pressure, in view of the pressure released from the reactor during the pre-blowdown step (c).

Thus, the blowdown pressure, at which the blowdown step starts, is typically in the range of 2 - 10 bar, preferably 3 - 7 bar, most preferably about 4 bar. During the blowdown step, the pressure is further reduced to the regeneration pressure, which is in the range of 1 - 5 bar, preferably in the range of 1.5 - 3 bar. The pressure drop during the blowdown step is preferably in the range of 0.2 - 7.5 bar, more preferably in the range of 0.5 - 5 bar, most preferably about 1 bar. During blowdown, gaseous COz molecules present in the reactor are released into COz product stream. Furthermore, the release of any remaining adsorbed COz molecule from the sorbent is promoted in view of the drop in COz pressure within the reactor. As such, COz is released from the reactor to a large extent, and the COz product stream is substantially pure. When desired, a water condensation step can be employed in order to increase the COz concentration of the COz product stream. This is common practice for carbon capture and storage processes.

*Step (e): Purge*

The process continues with a purge step, wherein steam is fed to the reactor. The introduction of steam leads to a lowering of the partial pressure of COz within the reactor and thus to the release of further COz molecules from the sorbent. During the purge step, pressure is typically not built up in the reactor, but the reactor remains at the regeneration pressure and an off-gas is collected. Typically, the off-gas of the purge step is collected as part of the COz product stream. It contains mainly COz and some non-adsorbed $H_2O$ molecules (steam).

At the end of the purge step, the sorbent is loaded with $H_2O$ molecules, and is ready for another reaction step. In a further preferred embodiment, the process according to the invention further comprises one or more repressurisation steps, which are performed after the purge step (e) and in which the pressure in the reactor is raised to the pressure of reaction step (a). If needed, the pressure of the feed or high-pressure product ensures that the reactor is pressurized to the desired pressure in order to perform step (a). Such repressurisation steps preferably are coupled to the depressurisation steps performed before the pre-blowdown step (c), as part of one or more pressure equalisation steps.

In a preferred embodiment, the process according to the invention is run as a cycle. When run as a cycle, the reactor at the end of the purge step (e) and preferably after being repressurised, is used in reaction step (a), wherein a feed gas comprising CO and $H_2O$ is fed into the reactor. In a further embodiment, when the process according to the invention is run as a cycle, at least two SEWGS reactors each undergoing the cycle are coupled. Preferably, at least 4 SEWGS reactors are coupled, such as 2 - 20 reactors, preferably 4-10 reactors. As such, one reactor is used for reaction step (a) while a second reaction is undergoing the regeneration sequence, which enables a continuous feed of the feed comprising CO and Hz. It is further preferred that one SEWGS reactor requiring depressurisation is coupled to another SEWGS reactor requiring repressurisation, thereby allowing one or more pressure equalisation steps which effect depressurisation of the first SEWGS reactor after the rinse step (b), and one or more respective pressure equalisation steps which effect repressurisation of the second SEWGS reactor directly after the purge step (e). In a more preferred embodiment, when the process according to the invention is run as a cycle, a multitude of SEWGS reactors each undergoing the cycle are coupled, wherein each of the multiple first SEWGS reactors requiring depressurisation is coupled to one of the multiple second SEWGS reactors in another step of the cycle requiring repressurisation, thereby allowing one or more pressure equalisation steps which effect depressurisation of the multiple first SEWGS reactors after the rinse step (b), and one or more respective pressure equalisation steps which effect repressurisation of the multiple second SEWGS reactors directly after the purge step (e).

In a preferred embodiment of the process according to the invention, the reactor undergoes the reaction step (a), the rinse step (b), the pre-blowdown step (c), the blowdown step (d), and the purge step (e), and optionally one or more intermediate pressure equalisation steps, in sequential order, preferably without substantial modification of the reactor by intermediate steps.

Reactors suitable for performing a SEWGS reaction are known in the art, and any such reactor may be employed for the process according to the invention. Typically, such a reactor is in the form of a column containing the sorbent material and catalyst, which may be present as fixed bed or fluidized bed. Suitable catalyst and sorbent materials are also known in the art, and any such material may be used in the context of the present invention.

Process for separating a $CO_2$ product stream

The inventive idea of the present invention can also be employed in a process for the separation of a COz product stream from an inert gas product stream. Since water gas shift reactivity is not essential for the process according to this embodiment, the process is typically carried out in an adsorber (or adsorption column), which comprises a sorbent material capable of adsorbing COz. Step (a) does not involve a reaction but only an adsorption and is thus referred to as an adsorption step. All other specifics, including preferred embodiments, as defined above for reaction step (a) equally apply to adsorption step (a). Likewise, all specifics for steps (b) - (e), including preferred embodiments, as defined above equally apply to the respective steps of the process according to the present embodiment.

The process according to this embodiment comprises:

(a) an adsorption step, wherein a feed gas comprising COz and one or more inert gases is fed into an adsorber containing a sorbent material capable of adsorbing COz, thereby forming the inert gas product stream and a sorbent material loaded with COz;
(b) a rinse step, wherein steam is fed to the adsorber, thereby establishing a pressure in the range of 5 - 50 bar;
(c) a pre-blowdown step, wherein the pressure in the adsorber is reduced to establish a blowdown pressure in the range of 0.5 - 1.5 times the partial pressure of CO and COz in the feed gas of step (a);
(d) a blowdown step, wherein the pressure in the adsorber is reduced to the regeneration pressure in the range of 1 - 5 bar, thereby releasing at least part of the COz from the loaded sorbent material, thereby forming the COz product stream; and
(e) a purge step, wherein steam is fed to the adsorber, thereby releasing further COz molecules from the adsorber,

wherein the off gas released from the reactor during step (c) is collected separately from the COz product stream released from the reactor during step (d).

The adsorption according to the present embodiment utilizes steam as working fluid. The feedstock of the process according to this embodiment is a gaseous mixture comprising COz and one or more inert gases. Herein, inert gases refers to gases that are not adsorbed by the sorbent, and thus exclude COz and HzO. CO may be part of the inert gases. If this is the case, it has an influence on the blowdown pressure established in step (c), as defined above. The one or more inert gases are typically selected from CO, $H_2$, $N_2$, Ar, $C_{1-4}$ hydrocarbons, $H_2S$ and $NO_x$. Most preferably, the inert gases comprise at least Hz.

## Examples

### *Packed-bed and intraparticle model*

The isotherm SEWGS model developed by Boon et al. (Boon, J., Cobden, P. D., Van Dijk, H. A. J., Hoogland, C., van Selow, E. V., & van Sint Annaland, M. (2014), Isotherm model for high-temperature, high-pressure adsorption of CO2 and H2O on K-promoted hydrotalcite, Chemical Engineering Journal, 248, 406-414.) was used to describe the transport phenomena in the packed-bed column and adsorption of COz as $H_2O$ (Tables 1 and 2). The double adsorption isotherms for COz and $H_2O$ in Boon's model consisted of both surface as nanopores contributions. However, the sorption mechanism proposed by Coenen et al. 2017 (Coenen, K., Gallucci, F., Pio, G., Cobden, P., van Dijk, E., Hensen, E. & van Sint Annaland, M. (2017), On the influence of steam on the COz chemisorption capacity of a hydrotalcite-based adsorbent for SEWGS applications, Chemical Engineering Journal, 314, 554-569) also predicts that a competitive site contributes to the adsorption of COz. In this study, the competitive site has been incorporated into the adsorption isotherms for both COz and HzO. Furthermore, only the adsorption of COz and $H_2O$ has been considered in this work. Any other gas species in the syngas mixture are not considered to be adsorbed by K-HTC.

*Table 1: Packed-bed column*

| | |
|---|---|
| Continuity: | $\frac{\partial\rho}{\partial t} = -\frac{\partial\rho v}{\partial z} + \frac{1-\epsilon_b}{\epsilon_b} a_p \sum_i M_i N_i$ |
| Momentum: | $0 = -\frac{\partial p}{\partial z} - f\,\frac{\rho\lvert u\rvert u}{d_p}$ |
| Heat balance: | $\left(\epsilon_b\rho C_p + (1-\epsilon_b)\rho_p C_{p,p}\right)\frac{\partial T}{\partial t} = -\rho C_p u\frac{\partial T}{\partial t} + \frac{\partial}{\partial z}\left(\lambda\frac{\partial T}{\partial z}\right) + \frac{4U(T_w - T)}{d_c} - (1-\epsilon_b)\rho_p\left((-\Delta H_r) r_{WGS} + \sum_i\left(-\Delta H_{a,i}\frac{d\langle q_i\rangle}{dt}\right)\right)$ |
| Mass balance: | $\frac{\partial(\rho\omega_i)}{\partial t} = \frac{\partial\rho v\omega_i}{\partial z} + \frac{\partial}{\partial z}\left(D_z\rho\frac{\partial\omega_i}{\partial z}\right) + \frac{1-\epsilon_b}{\epsilon_b} a_p M_i N_i$ |

*Table 2: Intra-particle model*

| | |
|---|---|
| Mass balance: | $\frac{d\langle c_i\rangle}{dt} = k_{LDF,i}\left(c_{int,i} - \langle c_i\rangle\right)$ |
| LDF mass transfer coefficient: | $k_{LDF,i} = \frac{15\mathcal{D}_{p,i}}{r_p^2\left(\epsilon_p - \rho_p\frac{\partial q_i}{\partial c_i}\right)}$ |
| Multicomponent isotherm: | $\langle q_i\rangle = f(\langle c_{i...N}\rangle)$ |

### Numerical solution strategy

Boundary conditions: The pressure was defined at the outlet of the column while the feed flowrate is defined at the inlet. The equations were discretized on a uniform grid in the spatial term. To prevent numerical shock problems, a second order flux delimited Barton's scheme for the convective terms was implemented in the code (Centrella, J. & Wilson, J. R. (1984), Planar numerical cosmology II - The difference equations and numerical tests, The Astrophysical Journal Supplement Series, 54, 229-249; Goldschmidt, M. J. V., Kuipers, J. A. M., & van Swaaij, W. P. M. (2001), Hydrodynamic modelling of dense gas-fluidised beds using the kinetic theory of granular flow: effect of coefficient of restitution on bed dynamics, Chemical Engineering Science, 56(2), 571-578; Boon, J., Cobden, P. D., Van Dijk, H. A. J., Hoogland, C., van Selow, E. V., & van Sint Annaland, M. (2014), Isotherm model for high-temperature, high-pressure adsorption of COz and H2O on K-promoted hydrotalcite, Chemical Engineering Journal, 248, 406-414.). For the dispersion terms a second order implicit central differencing scheme applied. The source terms were semiimplicit linearized. Dankwert's boundary conditions applied for the mass and heat balance.

Integration scheme: The now time-dependent ODEs were solved with an Euler forward scheme with time step adaption. Adaptation of the time step occurs in three cases. Firstly, when the maximum number of iterations occurred to obtain the lowest error. Secondly, if large changes occur between the initial steady-state solution and the current solution. Large changes are defined as the differences between these two states. Thirdly, if the Courant-Friederich-Lewy (CFL) condition, C, becomes higher than 0,5, the timestep was adjusted to meet C < 0,5. The CFL condition is calculated according to $C = u\ dt/dz$ in which dt is the timestep, dz the spatial stepsize, and u the velocity

Cyclic simulations: several different cycles were simulated. In the following sections the specific processing parameters and boundary conditions are given. All cycles were simulated in time as an extension of the single column model. Any connecting step in a cycle were temporarily stored in files. As the SEWGS process is a cyclic process, the simulations continues for several cycles until a cyclic steady state is reached. This state is reached when the performance indicators CCR and CP do not change more than 5%. The number of cycles that needs to be simulated depends on the applied conditions for the column. Typically, a minimum of 15 cycles was required.

Data interpretation: For all models a set of performance indicators were determined. For the SEWGS process in general these indicators are the carbon capture and recovery ratio and the COz purity. The cycle performance indicated is indicated by the productivity, steam consumption, CO conversion, COz adsorption ratio. For all cases $y_i$ and $F_{mol}$ are the integrals over time in given step. The integrals are approximated by the trapezoidal rule.

$$CCR = \frac{\left((y_{CO_2} + y_{CO})F_{mol}\right)_{CO_2\ product}}{\left((y_{CO_2} + y_{CO})F_{mol}\right)_{syngas\ feed}} \quad (3.1)$$

$$CP = y_{CO_2,CO_2\ product} \quad (3.2)$$

$$Prod. = \frac{\left(y_{CO_2}F_{mol}\right)_{CO_2\ product}}{mass\ adsorbent \cdot t_{cycle}} \quad (3.3)$$

$$CO\ conv. = 1 - \frac{(y_{CO}F_{mol})_{CO_2\ product} + (y_{CO}F_{mol})_{H_2\ product}}{(y_{CO}F_{mol})_{syngas\ feed}} \quad (3.4)$$

$$CO_2\ ads.ratio = \frac{\left(y_{CO_2}F_{mol}\right)_{H_2\ product}}{\left(y_{CO_2}F_{mol}\right)_{syngas\ feed}} \quad (3.5)$$

**Example 1**

A process consisting of adsorption, rinse (with S/C = 0.05), 3 pressure equalisations, pre-blowdown, blowdown, purge (with S/C = 1.25) and repressurisation at cyclic steady-state was simulated. The accompanying cycle design corresponds to a single train system of 7 columns. The feed composition is shown in the table below:

| Component | mol% |
|---|---|
| $H_2O$ | 25.73% |
| $H_2$ | 54.69% |
| CO | 3.43% |
| $CO_2$ | 12.67% |
| $N_2$ | 3.48% |

The total feed flowrate is 3.42 kmol/h. In the simulations, the blowdown pressure, which is established at the end of the pre-blowdown phase, is set at 6 bar (Example 1A), 4 bar (Example 1B) or 6 bar (Example 1C), with a pre-blowdown pressure resulting from the pressure equalisations at 7.8 bar. The result of this variation and its effect on the carbon capture ratio (CCR) and the COz purity (CP) is shown in Figure 1. CCR, CP and S/C are defined as shown below. This form of definition considers that the pre-blowdown product as not captured.

$$CCR = \frac{\left((y_{CO_2} + y_{CO})F_{mol}\right)_{CO_2\ Blowdown} + \left((y_{CO_2} + y_{CO})F_{mol}\right)_{CO_2\ Purge}}{\left((y_{CO_2} + y_{CO})F_{mol}\right)_{syngas\ feed}}$$

$$CP = \left(\frac{y_{CO_2}}{1 - y_{H_2O}}\right)_{CO2\ Product}$$

$$\frac{S}{C} = \frac{Total\ H_2O\ fed\ during\ Purge\ or\ Rinse}{Total\ COx\ fed\ during\ feed}$$

Simulations confirmed that the same performance in terms of CCR and CP can be reached using a cycle design without a pre-blowdown step, albeit at a significantly higher steam consumption (OpEx) and a higher number of columns and trains (CapEx). Compared to the pre-blowdown cycle at a pre-blow-down pressure of 4 bar (Example 1B), achieving a COz purity of 97% and Carbon Capture Rate of 81% with 7 columns in a single train system and a total steam consumption of 1.25 S/C, a cycle design without pre-blowdown would require a steam consumption of 1.4 S/C and the double amount of columns. Therefore, a comparable performance of requires 12% higher steam consumption and 100% increase in CAPEX.

**Example 2**

The same composition as Example 1 was simulated but with the pre-blowdown step being introduced into a system that is processing half the flowrate, i.e. 1.71 kmol/h. The blowdown pressure was varied between 2 and 8 bar. The result of this is shown in Figure 2. An optimum of 90% CCR and 96% purity is achieved at a blowdown pressure of 4 bar.

An assessment was performed to see at what steam consumption, this optimum point can be achieved by a process design without pre-blowdown step and without an increase in CAPEX (i.e. same amount of columns). The results of this assessment is shown in Figure 3, wherein the optimum at a pre-blowdown pressure of 4 bar is shown with open dots. Increasing the total S/C from 1.3 to 1.65, corresponding to steam increase during rinse from form S/C = 0.05 to S/C = 0.4 with a constant steam purge of S/C = 1.25, the COz purity increased but the Carbon Capture Rate decreased. Even at a total S/C of 1.65, CP is not even close to 90%. At the same time, CCR has declined from 98% to 92%. This decrease is primarily due to increased COz crossover as the result of increased rinse. The pre-blowdown step is able to trade-off Carbon Capture Rate and COz purity in a significantly more efficient way compared to the process without pre-blowdown step.

**Claims**

**1.** A sorption-enhanced water-gas shift (SEWGS) process for the formation of a COz product stream and an Hz product stream, comprising:

(a) a reaction step, wherein a feed gas comprising $CO_x$, wherein $x$ = 1 - 2, and $H_2O$ is fed into a SEWGS reactor containing a catalyst and sorbent material capable of adsorbing COz, thereby forming the Hz product stream and a sorbent material loaded with COz;
(b) a rinse step, wherein steam is fed to the SEWGS reactor, thereby establishing a pressure in the range of 5 - 50 bar;
(c) a pre-blowdown step, wherein the pressure in the SEWGS reactor is reduced to establish a blowdown pressure in the range of 0.5 - 1.5 times the partial pressure of CO and COz in the feed gas of step (a);
(d) a blowdown step, wherein the pressure in the SEWGS reactor is reduced to the regeneration pressure in the range of 1 - 5 bar, thereby releasing at least part of the COz from the loaded sorbent material, thereby forming the COz product stream; and
(e) a purge step, wherein steam is fed to the SEWGS reactor, thereby releasing further COz molecules from the SEWGS reactor,

wherein the off gas released from the reactor during step (c) is collected separately from the COz product stream released from the reactor during step (d).

**2.** The process according to claim 1, wherein the feed pressure is in the range of 5 - 50 bar, and/or the blowdown pressure is in the range of 2 - 10 bar.

**3.** The process according to claim 1 or 2, wherein in the pre-blowdown step the pressure is reduced by 1 - 25 bar, preferably by 2 - 8 bar.

**4.** The process according to any of the preceding claims, wherein the feedstock contains 0 - 10 mol% CO and 0-80 mol% COz, wherein the total content of $CO_x$ in the feedstock is at least 2 mol%.

**5.** The process according to any of the preceding claims, further comprising one or more pressure equalisation steps, wherein the SEWGS reactor is depressurized directly after the rinse step (b) and the SEWGS reactor is repressurized directly after the purge step (e).

**6.** The process according to any of the preceding claims, wherein the process is run as a cycle, wherein the reactor is subjected to step (a) after being purged in step (e), optionally after being repressurized.

**7.** The process according to claim 5, wherein at least two, preferably at least four reactors undergoing the process are coupled, wherein one reactor requiring depressurisation is coupled to another reactor requiring repressurisation.

**8.** The process according to any of the preceding claims, wherein the blowdown pressure is in the range 3-7 bar, preferably the blowdown pressure is about 4 bar.

**9.** The process according to any of the preceding claims, wherein the off-gas of the pre-blowdown step (c) is recycled to reaction step (a) or collected as tail gas.

**10.** The process according to claim 9, wherein the off-gas of the pre-blowdown step (c) is recycled to reaction step (a) and the blowdown pressure is in the range of 2 - 4 bar, preferably wherein the blowdown pressure is about 3 bar.

**11.** The process according to claim 9, wherein the off-gas of the pre-blowdown step (c) is collected as tail gas and the blowdown pressure is in the range of 3 - 8 bar, preferably wherein the blowdown pressure is about 5 bar.

**12.** A process for the separation of a COz product stream from an inert gas product stream, comprising:

(a) an adsorption step, wherein a feed gas comprising COz and one or more inert gases is fed into an adsorber containing a sorbent material capable of adsorbing COz, thereby forming the inert gas product stream and a sorbent material loaded with COz;
(b) a rinse step, wherein steam is fed to the adsorber, thereby establishing a pressure in the range of 5 - 50 bar;
(c) a pre-blowdown step, wherein the pressure in the adsorber is reduced to establish a blowdown pressure in the range of 0.5 - 1.5 times the partial pressure of CO and COz in the feed gas of step (a);
(d) a blowdown step, wherein the pressure in the adsorber is reduced to the regeneration pressure in the range of 1 - 5 bar, thereby releasing at least part of the COz from the loaded sorbent material, thereby forming the COz product stream; and
(e) a purge step, wherein steam is fed to the adsorber, thereby releasing further COz molecules from the adsorber,

wherein the off gas released from the reactor during step (c) is collected separately from the COz product stream released from the reactor during step (d).

**13.** The process according to claim 11, wherein the one or more inert gases are selected from CO, $H_2$, $N_2$, Ar, $C_{1-4}$ hydrocarbons, $H_2S$ and $NO_x$.

**Patentansprüche**

**1.** Sorptionsverstärktes Wasser-Gas-Shift(SEWGS)-Verfahren zur Bildung eines $CO_2$-Produktstroms und eines $H_2$-Produktstroms, das Folgendes umfasst:

(a) einen Reaktionsschritt, bei dem ein Speisegas, das $CO_x$, wobei $x = 1 - 2$, und $H_2O$ umfasst, in einen SEWGS-Reaktor eingespeist wird, der einen Katalysator und ein Sorptionsmaterial enthält, das $CO_2$ adsorbieren kann,

wodurch der $H_2$-Produktstrom und ein mit $CO_2$ beladenes Sorptionsmaterial gebildet werden;
(b) einen Spülschritt, bei dem dem SEWGS-Reaktor Dampf zugeführt wird, wodurch ein Druck im Bereich von 5 - 50 bar aufgebaut wird;
(c) einen Vorabblaseschritt, bei dem der Druck in dem SEWGS-Reaktor reduziert wird, um einen Abblasedruck im Bereich des 0,5- - 1,5-fachen des CO- und $CO_2$-Partialdrucks in dem Speisegas von Schritt (a) aufzubauen;
(d) einen Abblaseschritt, bei dem der Druck in dem SEWGS-Reaktor auf den Regenerationsdruck im Bereich von 1 - 5 bar reduziert wird, wodurch mindestens ein Teil des $CO_2$ aus dem beladenen Sorptionsmaterial freigesetzt wird, wodurch der $CO_2$-Produktstrom gebildet wird; und
(e) einen Reinigungsschritt, bei dem dem SEWGS-Reaktor Dampf zugeführt wird, wodurch weitere $CO_2$-Moleküle aus dem SEWGS-Reaktor freigesetzt werden,

wobei das während Schritt (c) aus dem Reaktor freigesetzte Abgas getrennt von dem während Schritt (d) aus dem Reaktor freigesetzten $CO_2$-Produktstrom gesammelt wird.

**2.** Verfahren nach Anspruch 1, wobei der Speisedruck im Bereich von 5 - 50 bar liegt und/oder der Abblasedruck im Bereich von 2 - 10 bar liegt.

**3.** Verfahren nach Anspruch 1 oder 2, wobei in dem Vorabblaseschritt der Druck um 1 - 25 bar, vorzugsweise um 2 - 8 bar reduziert wird.

**4.** Verfahren nach einem der vorhergehenden Ansprüche, wobei das Ausgangsmaterial 0 - 10 Mol-% CO und 0 - 80 Mol-% $CO_2$ enthält, wobei der Gesamtgehalt an $CO_x$ in dem Ausgangsmaterial mindestens 2 Mol-% beträgt.

**5.** Verfahren nach einem der vorhergehenden Ansprüche, das ferner einen oder mehrere Druckausgleichsschritte umfasst, wobei der SEWGS-Reaktor direkt nach dem Spülschritt (b) druckentlastet wird und der SEWGS-Reaktor direkt nach dem Reinigungsschritt (e) wieder unter Druck gesetzt wird.

**6.** Verfahren nach einem der vorhergehenden Ansprüche, wobei das Verfahren als Zyklus ausgeführt wird, wobei der Reaktor dem Schritt (a) unterzogen wird, nachdem er in Schritt (e) gereinigt wurde, gegebenenfalls nachdem er erneut unter Druck gesetzt wurde.

**7.** Verfahren nach Anspruch 5, wobei mindestens zwei, vorzugsweise mindestens vier Reaktoren gekoppelt werden, die dem Verfahren unterzogen werden, wobei ein Reaktor, der eine Druckentlastung benötigt, mit einem anderen Reaktor gekoppelt wird, der eine erneute Druckerhöhung benötigt.

**8.** Verfahren nach einem der vorhergehenden Ansprüche, wobei der Abblasedruck im Bereich von 3 - 7 bar liegt, wobei vorzugsweise der Abblasedruck etwa 4 bar beträgt.

**9.** Verfahren nach einem der vorhergehenden Ansprüche, wobei das Abgas des Vorabblaseschritts (c) in den Reaktionsschritt (a) zurückgeführt oder als Restgas gesammelt wird.

**10.** Verfahren nach Anspruch 9, wobei das Abgas des Vorabblaseschritts (c) in den Reaktionsschritt (a) zurückgeführt wird und der Abblasedruck im Bereich von 2 - 4 bar liegt, wobei vorzugsweise der Abblasedruck etwa 3 bar beträgt.

**11.** Verfahren nach Anspruch 9, wobei das Abgas des Vorabblaseschritts (c) als Restgas gesammelt wird und der Abblasedruck im Bereich von 3 - 8 bar liegt, wobei vorzugsweise der Abblasedruck etwa 5 bar beträgt.

**12.** Verfahren zur Trennung eines $CO_2$-Produktstroms von einem Inertgas-Produktstrom, das Folgendes umfasst:

(a) einen Adsorptionsschritt, bei dem ein $CO_2$ und ein oder mehrere Inertgase umfassendes Speisegas in einen Adsorber eingespeist wird, der ein Sorptionsmaterial enthält, das $CO_2$ adsorbieren kann, wodurch der Inertgas-Produktstrom und ein mit $CO_2$ beladenes Sorptionsmaterial gebildet werden;
(b) einen Spülschritt, bei dem dem Adsorber Dampf zugeführt wird, wodurch ein Druck im Bereich von 5 - 50 bar aufgebaut wird;
(c) einen Vorabblaseschritt, bei dem der Druck in dem Adsorber reduziert wird, um einen Abblasedruck im Bereich des 0,5- - 1,5-fachen des CO-und $CO_2$-Partialdrucks in dem Speisegas aus Schritt (a) aufzubauen;
(d) einen Abblaseschritt, bei dem der Druck in dem Adsorber auf den Regenerationsdruck im Bereich von 1 - 5 bar reduziert wird, wodurch mindestens ein Teil des $CO_2$ aus dem beladenen Sorptionsmaterial freigesetzt

wird, wodurch der $CO_2$-Produktstrom gebildet wird; und

(e) einen Reinigungsschritt, bei dem dem Adsorber Dampf zugeführt wird, wodurch weitere $CO_2$-Moleküle aus dem Adsorber freigesetzt werden,

wobei das während Schritt (c) aus dem Reaktor freigesetzte Abgas getrennt von dem während Schritt (d) aus dem Reaktor freigesetzten $CO_2$-Produktstrom gesammelt wird.

**13.** Verfahren nach Anspruch 11, wobei das eine oder die mehreren Inertgase aus CO, $H_2$, $N_2$, Ar, $c_{1-4}$-Kohlenwasserstoffen, $H_2S$ und $NO_x$ ausgewählt sind.

## Revendications

**1.** Procédé de conversion eau-gaz amélioré par sorption (SEWGS) pour la formation d'un flux de produits $CO_2$ et d'un flux de produits $H_2$, comprenant :

(a) une étape de réaction, où un gaz d'alimentation comprenant du $CO_x$, où x = 1 à 2, et $H_2O$ est introduit dans un réacteur SEWGS contenant un catalyseur et un matériau sorbant capable d'adsorber le $CO_2$, formant ainsi le flux de produits $H_2$ et un matériau sorbant chargé de $CO_2$ ;

(b) une étape de rinçage, où de la vapeur est introduite dans le réacteur SEWGS, établissant ainsi une pression comprise dans la plage de 5 à 50 bars ;

(c) une étape préalable à la purge, où la pression dans le réacteur SEWGS est réduite pour établir une pression de purge comprise dans la plage de 0,5 à 1,5 fois la pression partielle de CO et de $CO_2$ dans le gaz d'alimentation de l'étape (a) ;

(d) une étape de purge, où la pression dans le réacteur SEWGS est réduite à la pression de régénération comprise dans la plage de 1 à 5 bars, libérant ainsi au moins une partie du $CO_2$ du matériau sorbant chargé, formant ainsi le flux de produits $CO_2$ ; et

(e) une étape de purge, où de la vapeur est introduite dans le réacteur SEWGS, libérant ainsi d'autres molécules de $CO_2$ du réacteur SEWGS,

où le gaz de dégagement libéré par le réacteur pendant l'étape (c) est collecté séparément du flux de produits $CO_2$ libéré du réacteur pendant l'étape (d).

**2.** Procédé selon la revendication 1, où la pression d'alimentation est comprise dans la plage de 5 à 50 bars, et/ou la pression de purge est comprise dans la plage de 2 à 10 bars.

**3.** Procédé selon la revendication 1 ou 2, où, lors de l'étape préalable à la purge, la pression est réduite de 1 à 25 bars, de préférence de 2 à 8 bars.

**4.** Procédé selon l'une quelconque des revendications précédentes, où la charge d'alimentation contient de 0 à 10 % en moles de CO et de 0 à 80 % en moles de $CO_2$, où la teneur totale en $CO_x$ dans la charge d'alimentation est d'au moins 2 % en moles.

**5.** Procédé selon l'une quelconque des revendications précédentes, comprenant en outre une ou plusieurs étapes d'égalisation de pression, où le réacteur SEWGS est dépressurisé directement après l'étape de rinçage (b) et le réacteur SEWGS est repressurisé directement après l'étape de purge (e).

**6.** Procédé selon l'une quelconque des revendications précédentes, où le procédé est exécuté comme un cycle, où le réacteur est soumis à l'étape (a) après avoir été purgé à l'étape (e), éventuellement après avoir été repressurisé.

**7.** Procédé selon la revendication 5, où au moins deux, de préférence au moins quatre réacteurs subissant le procédé sont couplés, où un réacteur nécessitant une dépressurisation est couplé à un autre réacteur nécessitant une repressurisation.

**8.** Procédé selon l'une quelconque des revendications précédentes, où la pression de purge est comprise dans la plage de 3 à 7 bars, de préférence la pression de purge est d'environ 4 bars.

**9.** Procédé selon l'une quelconque des revendications précédentes, où le gaz de dégagement de l'étape préalable à la purge (c) est recyclé vers l'étape de réaction (a) ou collecté en tant que gaz résiduaire.

**10.** Procédé selon la revendication 9, où le gaz de dégagement de l'étape préalable à la purge (c) est recyclé vers l'étape de réaction (a) et la pression de purge est comprise dans la plage de 2 à 4 bars, de préférence où la pression de purge est d'environ 3 bars.

**11.** Procédé selon la revendication 9, où le gaz de dégagement de l'étape préalable à la purge (c) est collecté en tant que gaz résiduaire et la pression de purge est comprise dans la plage de 3 à 8 bars, de préférence où la pression de purge est d'environ 5 bars.

**12.** Procédé pour la séparation d'un flux de produits $CO_2$ d'un flux de produit gazeux inerte, comprenant :

(a) une étape d'adsorption, où un gaz d'alimentation comprenant du $CO_2$ et un ou plusieurs gaz inertes est introduit dans un adsorbeur contenant un matériau sorbant capable d'adsorber le $CO_2$, formant ainsi le flux de produits gazeux inertes et un matériau sorbant chargé de $CO_2$ ;
(b) une étape de rinçage, où de la vapeur est introduite dans l'adsorbeur, établissant ainsi une pression comprise dans la plage de 5 à 50 bars ;
(c) une étape préalable à la purge, où la pression dans l'adsorbeur est réduite pour établir une pression de purge comprise dans la plage de 0,5 à 1,5 fois la pression partielle de CO et de $CO_2$ dans le gaz d'alimentation de l'étape (a) ;
(d) une étape de purge, où la pression dans l'adsorbeur est réduite à la pression de régénération comprise dans la plage de 1 à 5 bars, libérant ainsi au moins une partie du $CO_2$ du matériau sorbant chargé, formant ainsi le flux de produits $CO_2$ ; et
(e) une étape de purge, où de la vapeur est introduite dans l'adsorbeur, libérant ainsi d'autres molécules de $CO_2$ de l'adsorbeur,

où le gaz de dégagement libéré par le réacteur pendant l'étape (c) est collecté séparément du flux de produits $CO_2$ libéré du réacteur pendant l'étape (d).

**13.** Procédé selon la revendication 11, où l'un ou plusieurs gaz inertes sont sélectionnés parmi CO, $H_2$, $N_2$, Ar, les hydrocarbures en $C_{1-4}$, $H_2S$ et $NO_x$.

*Fig. 1*

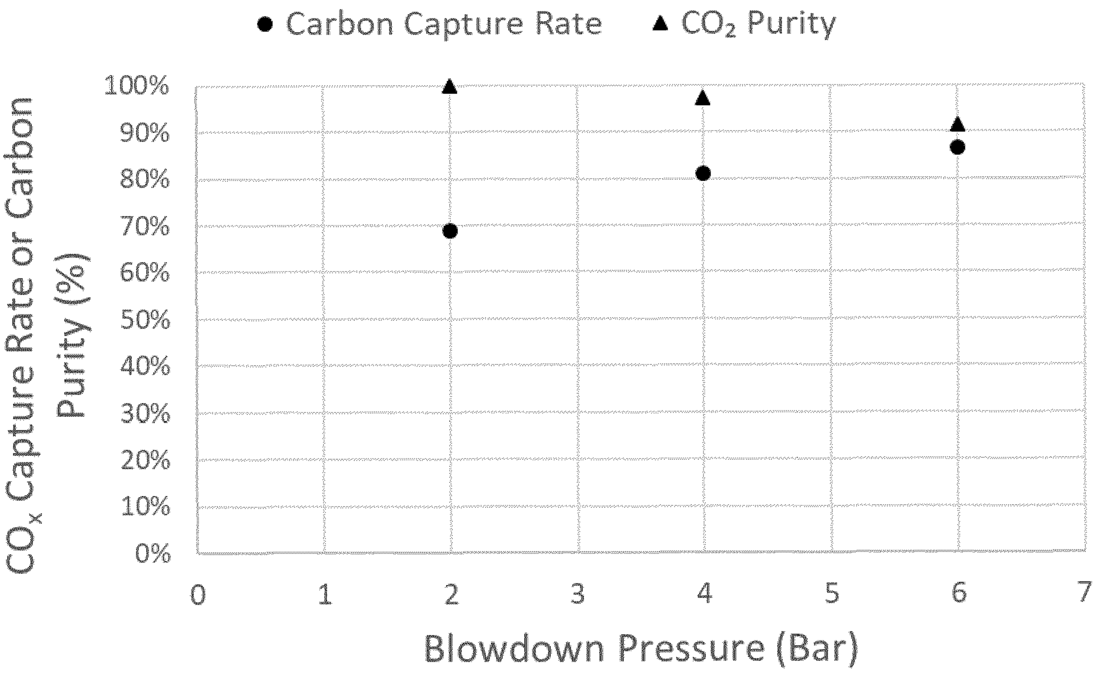
● Carbon Capture Rate
▲ $CO_2$ Purity
$CO_x$ Capture Rate or Carbon Purity (%)
100%
90%
80%
70%
60%
50%
40%
30%
20%
10%
0%
0
1
2
3
4
5
6
7
Blowdown Pressure (Bar)

*Fig. 2*

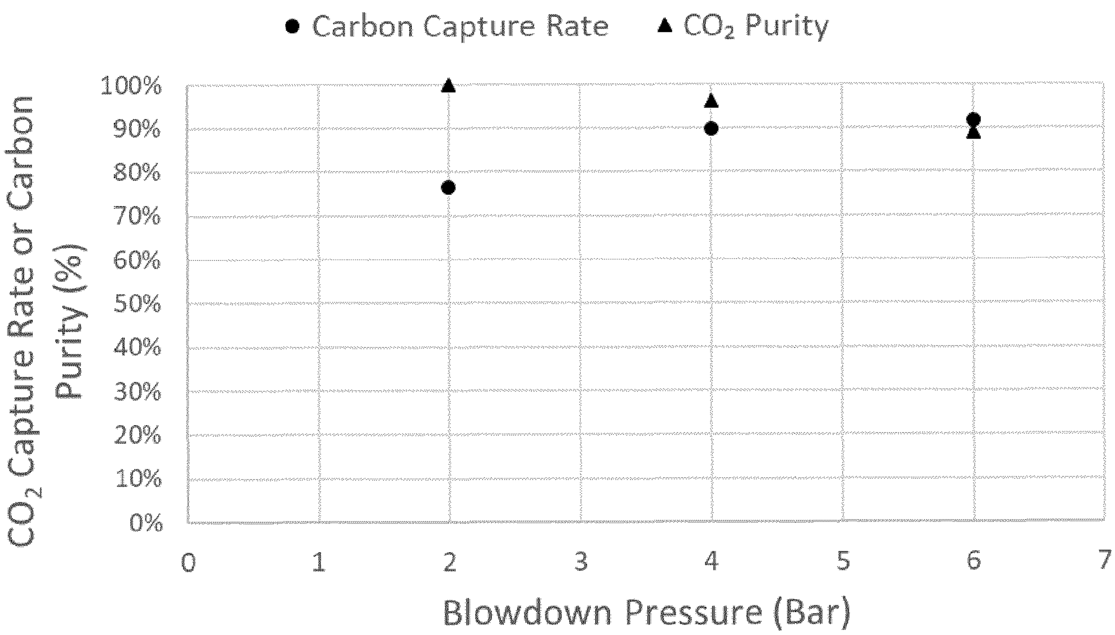
Carbon Capture Rate
CO₂ Purity
CO₂ Capture Rate or Carbon Purity (%)
100%
90%
80%
70%
60%
50%
40%
30%
20%
10%
0%
0
1
2
3
4
5
6
7
Blowdown Pressure (Bar)

*Fig. 3*

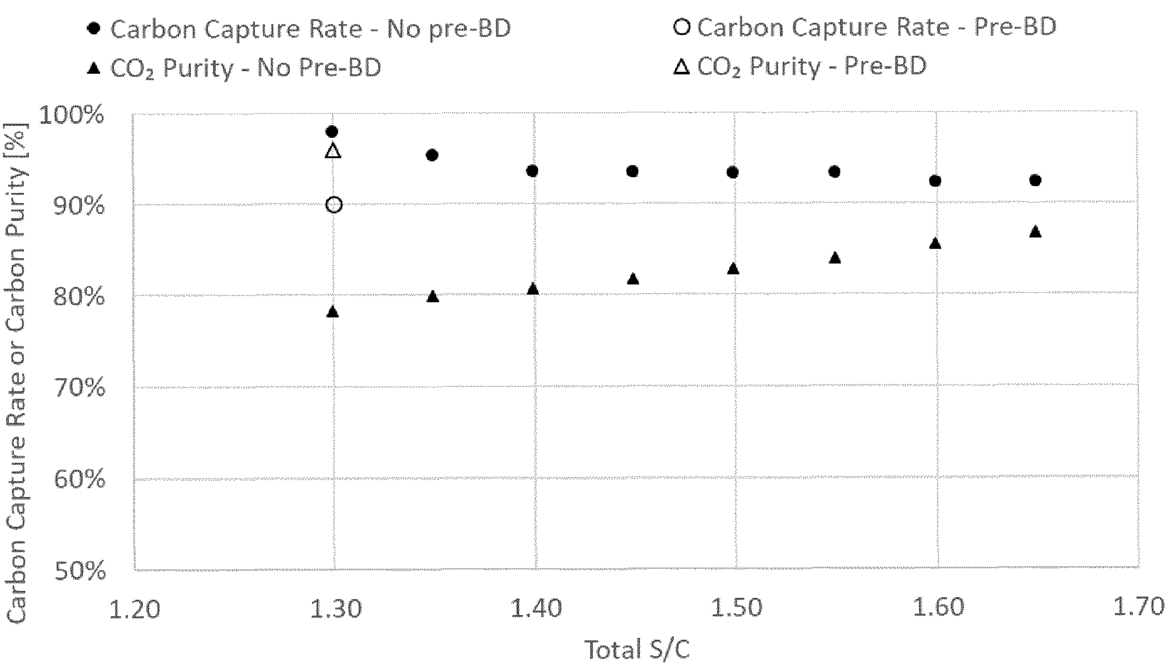
Carbon Capture Rate - No pre-BD
Carbon Capture Rate - Pre-BD
CO₂ Purity - No Pre-BD
CO₂ Purity - Pre-BD
Carbon Capture Rate or Carbon Purity [%]
100%
90%
80%
70%
60%
50%
1.20
1.30
1.40
1.50
1.60
1.70
Total S/C

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 3604210 A1
- WO 2010059055 A
- EP 2362848 A
- EP 2739373 A
- WO 2013122467 A


### Non-patent literature cited in the description


- **RICK REIJERS et al.** SEWGS process for cycle optimization. *Energy Procedia,* vol. 4, 1155-1161
- **BOON et al.** *Chemical Engineering Science,* 2015, vol. 122, 219-231
- **CHIESA P ; LOZZA G ; MAZZOCCHI L.** Using hydrogen as gas turbine fuel. *J. Eng. Gas Turbines Power,* 2005, vol. 127 (1), 73-80
- **GÖKE S ; FÜRI M ; BOURQUE G ; BOBUSCH B ; GÖCKELER K ; KRÜGER O et al.** Influence of steam dilution on the combustion of natural gas and hydrogen in premixed and rich-quench-lean combustors. *Fuel processing technology,* 2013, vol. 107, 14-22
- **BOON, J. ; COBDEN, P. D. ; VAN DIJK, H. A. J. ; HOOGLAND, C. ; VAN SELOW, E. V. ; VAN SINT ANNALAND, M.** Isotherm model for high-temperature, high-pressure adsorption of CO2 and H2O on K-promoted hydrotalcite. *Chemical Engineering Journal,* 2014, vol. 248, 406-414
- **COENEN, K. ; GALLUCCI, F. ; PIO, G. ; COBDEN, P. ; VAN DIJK, E. ; HENSEN, E. ; VAN SINT ANNALAND, M.** On the influence of steam on the COz chemisorption capacity of a hydrotalcite-based adsorbent for SEWGS applications. *Chemical Engineering Journal,* 2017, vol. 314, 554-569
- **CENTRELLA, J. ; WILSON, J. R.** Planar numerical cosmology II - The difference equations and numerical tests. *The Astrophysical Journal Supplement Series,* 1984, vol. 54, 229-249
- **GOLDSCHMIDT, M. J. V. ; KUIPERS, J. A. M. ; VAN SWAAIJ, W. P. M.** Hydrodynamic modelling of dense gas-fluidised beds using the kinetic theory of granular flow: effect of coefficient of restitution on bed dynamics. *Chemical Engineering Science,* 2001, vol. 56 (2), 571-578
- **BOON, J. ; COBDEN, P. D. ; VAN DIJK, H. A. J. ; HOOGLAND, C. ; VAN SELOW, E. V. ; VAN SINT ANNALAND, M.** Isotherm model for high-temperature, high-pressure adsorption of COz and H2O on K-promoted hydrotalcite. *Chemical Engineering Journal,* 2014, vol. 248, 406-414